# EUROPEAN PATENT APPLICATION

(11) **EP 2 929 784 A1**
(43) Date of publication of application: **14.10.2015**
(21) Application number: 15163247.8
(22) Date of filing: 10.04.2015
(51) Int. Cl.: A23G 3/02, A23G 3/20

(54) **MACHINE FOR PRODUCING FOOD PRODUCTS**

(30) Priority: 10.04.2014 IT MI20140139 U
(71) Applicant: Nuova Euromec S.r.l., 24057 Martinengo (BG) (IT)
(72) Inventor: Rizzi, Roberto, I-24123 Bergamo (BG) (IT); Rizzi, Mario, I-24057 Martinengo (BG) (IT)
(74) Representative: Giavarini, Francesco

(57) **Abstract**

A machine (1) for producing food products (10) characterized in that it comprises a supporting structure (2), a moulding station (3) for said food products (10) and an unloading station (4) of said food products, said moulding station (3) comprising a first supporting, conveying and processing chain (31) and a second processing chain (32), said first supporting, conveying and processing chain (31) comprising a plurality of first half-moulds (51) movable between a first rest position, a second preforming and cutting position and a third unloading position of said food products (10), said second processing chain (32) comprising a plurality of second half-moulds (52) opposite each other and couplable with respective first half-moulds (51) and movable between a first rest position and a second preforming and cutting position of said food products (10), said machine (1) also comprising first operating means of said first (31) and second chain (32) for movement of said food products (10) along a first direction of advance, second operating means of said first (51) and/or second half-moulds (52) adapted to move said first (51) and/or second (52) half-moulds between a first rest position and a second preforming and cutting position of said food products (10) and vice versa and third operating means adapted to move said first half-moulds (51) to the third unloading position of said food products (10).

## Description

The present invention relates to a machine for producing food products. In particular, the present invention relates to a machine for producing confectionery products and more in particular a machine for producing confectionery products such as sweets, chewing gum, bubble gum, both of soft and hard type, both of single component and multiple component type, or also provided with a filling consisting of a soft product, such as: jam, chocolate cream or similar creams, fondant, concentrated glucose syrup, a gummy mass of pectin and/or starch and/or gelatine or other gelling agents, and similar products.

Machines for producing confectionery products have been known and used for some time and can have very different characteristics from one another, according to the type of product to be produced.

These machines generally comprise a loading station, in which a precursor of confectionery products (for example, a continuous strip) is fed into the machine to be shaped and formed as required.

Once the product has been formed and cut, it is usually unloaded from the machine with different methods, according to requirements. However, the unloading step is one of the most delicate steps, as, according to the type of product, various problems can occur deriving from the fact that the product has not yet stabilized in its final form.

In fact, the product may still be sticky and/or too soft (and therefore subject to deformation following impacts) thus causing problems in management of the unloading step and problems of non-uniform quality.

Moreover, prior art machines are generally relatively complex both to manufacture and to manage, resulting in increased production and using costs.

Therefore, the main aim of the present invention is to provide a machine for producing food products and in particular a machine for producing confectionery products, which does not have the problems associated with prior art machines.

Within the scope of this aim, an object of the present invention is to provide a machine for producing food products, and in particular a machine facilitates unloading of the products after forming.

Another object of the present invention is to provide a machine for producing food products and in particular a machine for producing confectionery products, which is of relatively simple construction.

One more object of the present invention is to provide a machine for producing food products and in particular a machine for producing confectionery products, which can be used for a wide range of products.

Another aim of the subject matter of the present invention is to provide a machine for producing food products and in particular a machine for producing confectionery products, which is highly reliable and relatively easy to manufacture at competitive costs.

These aims and these objects are achieved through a machine for producing food products, in particular confectionery products, such as sweets, chewing gum, bubble gum and the like, characterized in that it comprises a supporting structure, a moulding station of said food products and an unloading station of said food products; in the machine according to the present invention, said moulding station comprises a first supporting, conveying and processing chain and a second processing chain, said first supporting, conveying and processing chain comprising a plurality of first half-moulds movable between a first rest position, a second preforming and cutting position and a third unloading position of said food products, said second processing chain comprising a plurality of second half-moulds opposite each other and couplable with respective first half-moulds and movable between a first rest position and a second preforming and cutting position of said food products; moreover, the machine according to the present invention comprises first operating means of said first and second chains for movement of said food products along a first direction of advance, second operating means of said first and/or second half-moulds adapted to move said first and/or second half-moulds between a first rest position and a second preforming and cutting position and vice versa, and third operating means adapted to move said first half-moulds to said third unloading position of said food products.

In practice, the machine according to the present model has a simplified structure essentially consisting of the two chains, with each of which there are associated respective half-moulds for forming and cutting the products. Moreover, as better described below, the first half-moulds are also used for unloading the products after they are formed, reducing the number of components required for forming and handling of the products and further simplifying the overall structure of the machine.

This simplifies production operations, thereby reducing not only the manufacturing costs of the machine but also its running costs and the production costs of the confectionery product. Moreover, given its peculiar features, unloading of products from the machine according to the present model takes place when these products have stabilized sufficiently, preventing or minimizing the problems of prior art machines.

Preferably, in the machine according to the present invention, said first and second chains define a substantially horizontal work surface interposed therebetween. In practice, the two chains are advantageously mounted at two different heights, the first chain being placed below the horizontal work surface and the second chain being placed above said horizontal work surface. Moreover, as better described below, the two chains are preferably mounted staggered with respect to a longitudinal surface perpendicular to the horizontal work surface.

Advantageously, one of the peculiar features of the machine according to the present model is given by the fact that said first chain extends into said unloading station.

In this case, said unloading station preferably comprises an unloading belt side by side with said first chain, said unloading belt advantageously lying on said work surface.

In a particularly preferred embodiment of the machine according to the present model, said first half-moulds are integral with the movement of said first chain along said first direction of advance, and said second half-moulds are integral with the movement of the second chain along said first direction of advance.

Moreover, said first and second half-moulds are advantageously mounted sliding on said first and second chains so as to be movable, between said first rest position and said second forming and cutting position, along a second direction substantially perpendicular to said first direction of advance.

In another particularly preferred embodiment of the machine according to the present invention, said first half-moulds are mounted sliding on said first chain so as to be movable to said third unloading position along a second direction substantially perpendicular to said first direction of advance.

In this way, the first half-moulds can advantageously perform both the function of forming and cutting of the products and the function of unloading said products from the work surface, as better described below.

Movement of the half-moulds can be implemented with appropriate methods. Advantageously, said second operating means can, for example, comprise a first and a second shaped surface adapted to impart to said first and second half-moulds a movement along said second direction.

Likewise, also said third operating means can advantageously comprise a third shaped surface adapted to impart to said first half-moulds a movement to said third unloading position along said second direction.

Further features and advantages of the present invention will be more apparent from the description of preferred, but not exclusive, embodiments of a machine for producing food products according to the present invention, shown by way of example in the accompanying drawings, wherein:

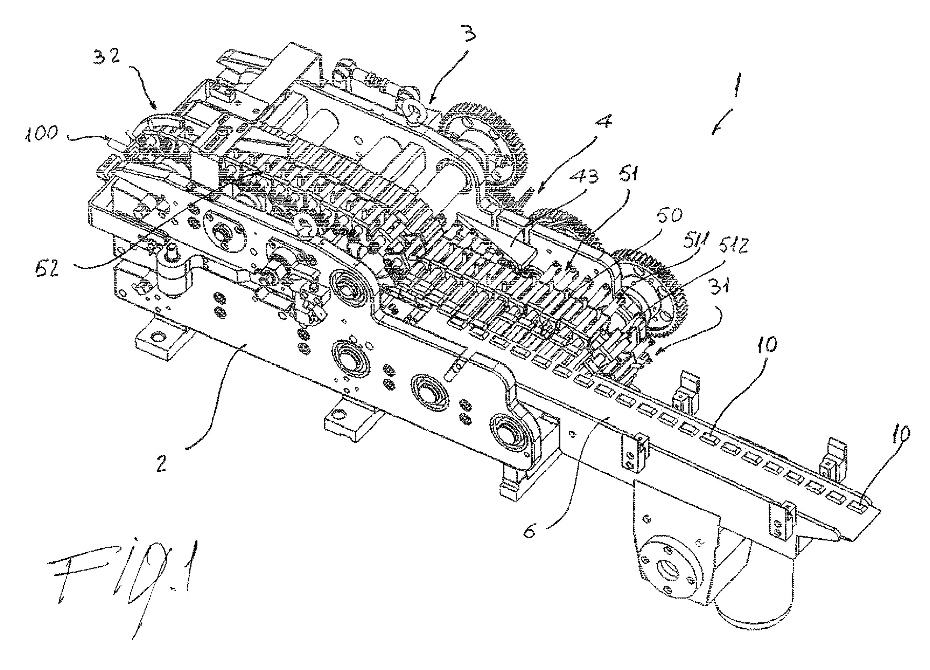

Fig. 1 is a first perspective view of an embodiment of a machine for producing food products according to the present model;

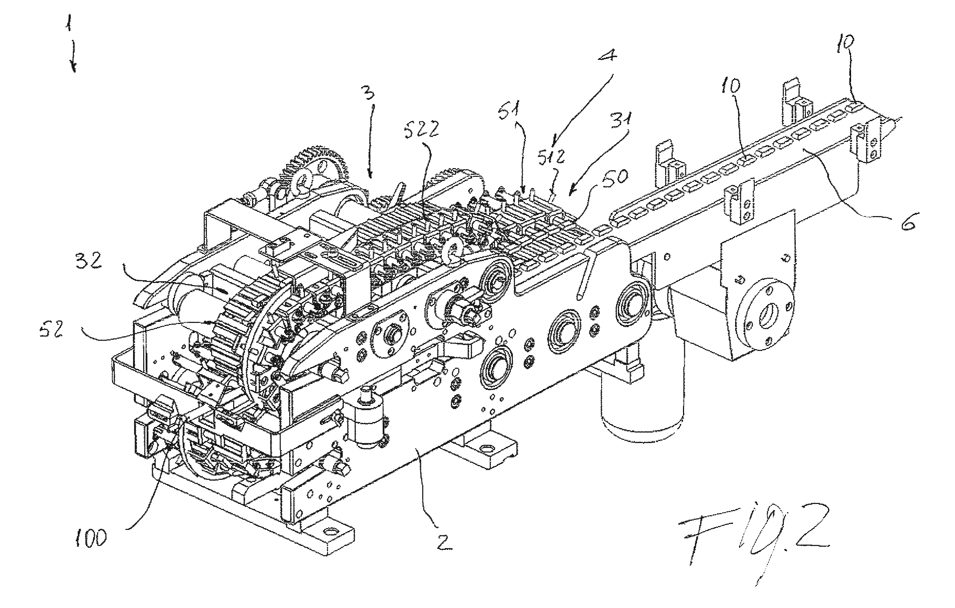

Fig. 2 is a second perspective view of an embodiment of a machine for producing food products according to the present model;

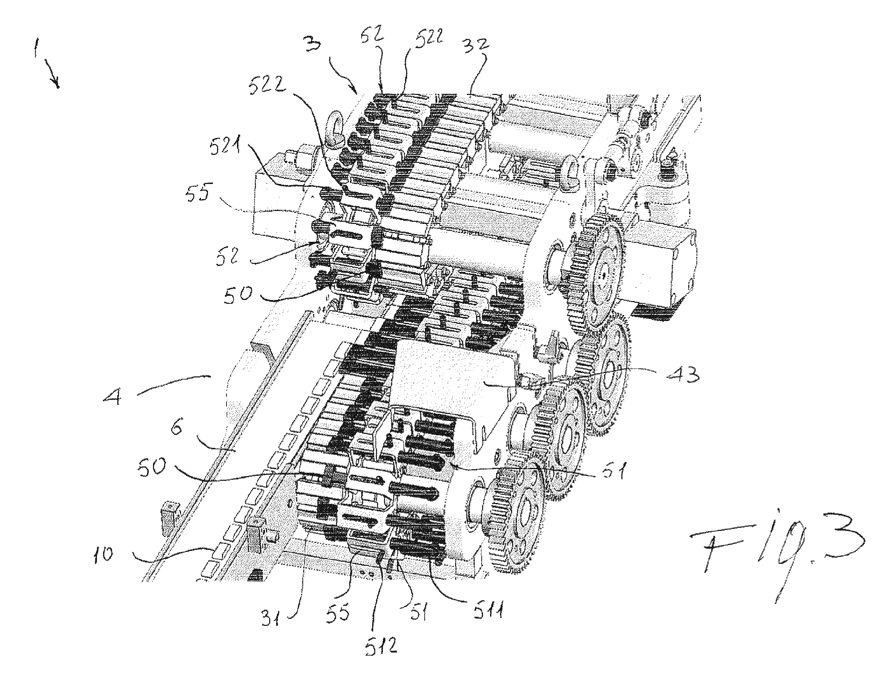

Fig. 3 is a detailed perspective view of the unloading station of an embodiment of a machine for producing food products according to the present model;
Fig. 4 is a plan view of an embodiment of a machine for producing food products according to the present model.

With reference to the accompanying figures, an embodiment of a machine for producing food products 10 according to the present model, indicated as a whole with the reference number 1, comprises, in its most general embodiment, a supporting structure 2, a moulding station 3 of said food products 10 and an unloading station 4 of said food products 10.

The food products 10 obtainable with the machine 1 according to the present invention generally consist of confectionery products, such as hard or soft sweets, chewing gum or bubble gum or similar products, with or without a filling; in the case in which a filling is provided, the products can have a closed structure or an open bowl-like structure.

At the opposite end of the moulding station 3 with respect to the loading station 4, there is generally an unloading station, not shown in the figures, of a precursor of the food products 10, for example a strip 100.

One of the peculiar features of the machine 1 for producing food products 10 according to the present invention is given by the fact that said moulding station 3 comprises a first supporting, conveying and processing chain 31 and a second processing chain 32.

In particular, said first supporting, conveying and processing chain 31 comprises a plurality of first half-moulds 51 movable between a first rest position, a second preforming and cutting position and a third unloading position of said food products 10, while said second processing chain 32 comprises a plurality of second half-moulds 52 opposite each other and couplable with respective first half-moulds 51 and movable between a first rest position and a second preforming and cutting position of said food products 10, according to operating mechanisms described in detail below.

The machine 1 for producing food products 10 according to the present model also comprises first operating means of said first 31 and second 32 chains for movement of said food products 10 along a first direction of advance, for example consisting of one or more electric motors connected to said first 31 and second 32 chains. For example, there can be at least one electric motor connected to each chain, or a single motor connected with appropriate transmission systems to both chains 31 and 32.

As can be understood from the accompanying figures, the first 31 and the second 32 chains are advantageously mounted respectively on a first and second pair of horizontal axes, so as to produce a closed loop path around the respective pairs of axes.

Forming and cutting of the food products 10 is performed through second operating means of said first 51 and/or second 52 half-moulds adapted to move said first 51 and/or second 52 half-moulds between a first rest position and a second forming and cutting position of said food products 10 and vice versa.

In practice, in the machine 1 according to the invention, the food product 10 is advantageously produced from a continuous strip 100, produced for example by a drawing machine or by an extruder, which is fed to the machine 1 in the loading area.

From the loading area, the shaped strip 100 is sent to the moulding station 3 where the strip 100 is shaped and cut by the half-moulds 51 and 52 to form the required food product 10.

As is evident from the accompanying figures, in the machine 1 for producing food products 10 according to the present model, the first 31 and the second 32 chains are advantageously mounted at two different heights so as to define a substantially horizontal work surface interposed therebetween.

In practice, the first chain 31 is placed below the horizontal work surface and the second chain 32 is placed above said horizontal work surface. Moreover, as is evident from the figures, preferably the two chains 31 and 32 are mounted in opposite position with respect to a longitudinal surface perpendicular to the horizontal work surface, the sliding axis of the strip 100 being defined by the intersection between said longitudinal surface and said horizontal work surface.

At the moulding station 3, the first 51 and second 52 half-moulds are moved towards each other at the strip 100, which is thus formed and cut as required according to the shape of these half-moulds. Normally, even if it is possible to move a single series of half-moulds (for example the first half-moulds 51) and keep the other (in this case the second half-moulds 52) fixed, it is preferable to move both the first and second half-moulds 51 and 52.

The machine 1 for producing food products 10 according to the present model also comprises third operating means adapted to move said first half-moulds 51 to said third unloading position of said food products 10, as described in detail below.

Preferably, as shown in the accompanying figures, the first chain 31 extends into said unloading station 4. In this way, the food products 10 are carried into the unloading station 4 by the first chain 31 and can be unloaded due to the appropriate movement of the first half-moulds 51, without interposing further transfer means.

For this purpose, in the machine 1 according to the present model said unloading station 4 can advantageously comprise an unloading belt 6 side by side with said first chain 31. Preferably, said unloading belt 6 lies substantially on said work surface so that the movement of the food products 10 to be unloaded always takes place at the same level.

In practice, in the embodiment shown in the accompanying figures, the first and second half-moulds 51 and 52 are integral with the movement of the respective first and second chains 31 and 32, along said first direction of advance. In other words, movement of each of the chains 31 and 32 causes movement of the half-moulds 51 and 52 along said direction of advance. In this way, movement of the first 31 and second 32 chains makes it possible to convey and simultaneously form and cut the shaped strip 100.

Advantageously, the first and the second half-moulds 51 and 52 are mounted sliding on the respective first and second chains 31 and 32 so as to be movable, between said first rest position and said second forming and cutting position, along a second direction substantially perpendicular to said first direction of advance. In practice, the half-moulds 51 and 52 are constrained to the respective first and second chains 31 and 32 so as to follow them along the direction of advance. These half-moulds 51 and 52, in rest position, are spaced apart from each other. Through the second operating means, the half-moulds 51 and 52 are moved towards each other so as to close around the strip 100 and cause forming and cutting of the food products 10, before being moved away from each other again to enable unloading of said food products 10.

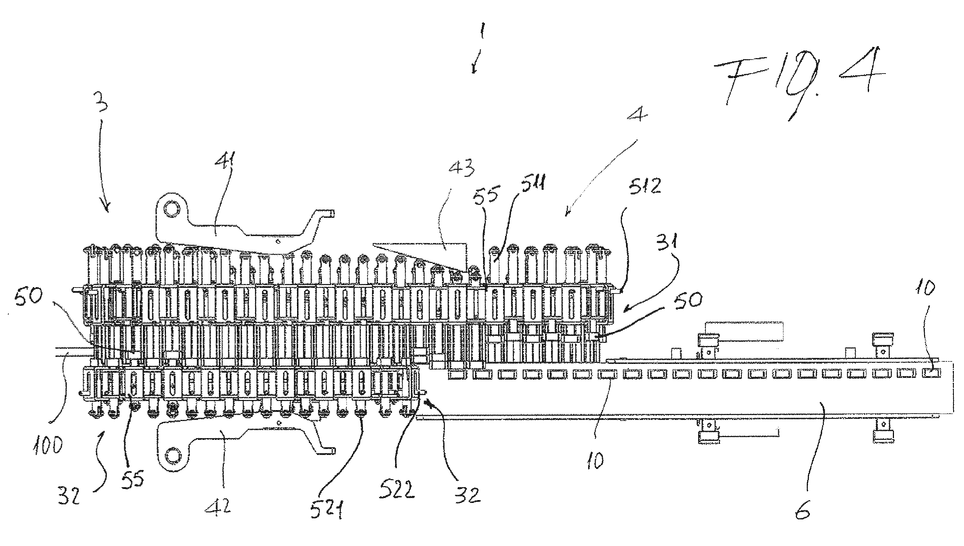

With reference to Fig. 4, in a preferred embodiment of the machine 1 for producing food products 10 according to the present model, said second operating means comprise a first 41 and a second 42 shaped surface, adapted to impart to said first 51 and second 52 half-moulds a movement along said second direction.

In practice, with reference to Fig. 4, through the first chain 31 the strip 100 forming the precursor of the food products 10 is sent to the work surface formed between said first 31 and second 32 chains. In the accompanying figures, the direction of advance is from left to right. Outside the work surface, the first 51 and second 52 half-moulds are in the rest position, spaced apart from each other. Inside the work surface there are positioned the first 41 and second 42 shaped surfaces, which force the half-moulds 51, 52 to move towards each other so as to close around the strip 100 and cause forming and cutting of the food products 10. In proximity of the exit from the work surface (right side of the figures), the first 41 and second 42 surfaces are shaped so as to enable the half-moulds 51 and 52 to move apart, thus enabling unloading of the food products 10.

Once the food products 10 have been formed, they are conveyed into the unloading station 4 by the first chain 31.

As previously stated, the first half-moulds 51 are advantageously mounted sliding on said first chain 31 so as to be movable from their rest position to a third unloading position along a second direction substantially perpendicular to said first direction of advance. In practice, in the unloading station 4, the first half-moulds 51 are moved perpendicularly to the direction of advance, causing transfer of the food products 10 from the first chain 31 to the unloading belt 6 side by side with said first chain 31.

In practice, in the embodiment shown in Fig. 4, in the machine 1 according to the present model said third operating means comprise a third shaped surface 43 adapted to impart to said first half-moulds 51 a movement in a direction perpendicular to the direction of advance thus causing transfer of the food products 10 from the chain 31 to the belt 6.

In this way the food product 10 can be unloaded after it has stabilised sufficiently and without undergoing deformations or without spillage of product, for example in the case of products with an open bowl-like structure and with a semi-solid or gummy filling.

In the most general embodiment, the half-moulds 51 and 52 preferably comprise supporting means for operative connection with the first 31 and second 32 chains, forming and cutting means for forming and cutting said food products 10 and means for operative coupling with said second operating means for their movement between said first rest position and said second preforming and cutting position and vice versa; moreover, the first half-moulds 51 comprise means for operative coupling with said third operating means for their movement to said third unloading position.

In the embodiments illustrated, the half-moulds 51 and 52 comprise forming and cutting means comprising a shaped head 50 adapted to impart a suitable shape to the food products 10.

Moreover, in the embodiments illustrated, the half-moulds 51 and 52 comprise a support 55, in which there is mounted a spindle 511, 521, which supports the shaped head 50 at one end. This spindle 511, 521 is provided with guide means, for example a guide pin 512, 522 adapted to slide in a groove produced in said support 55, and to guide the travel of the spindle 511, 521 in a direction substantially perpendicular to the first direction of advance. At the opposite end of the spindle 511, 521 with respect to the shaped head 50 there are sliding means, consisting for example of rollers or wheels, adapted to slide on the shaped surfaces 41 and 42, causing movement of the spindle 511, 521 and consequently of the shaped head 50 between said first rest position and said second forming and cutting position. Elastic means, for example springs, can be provided to ensure the return of the spindle 511, 521 and of the shaped head 50 to the rest position. The second operating means can also consist of pneumatic or hydraulic devices, for example piston means, connected with the half-moulds 51 and 52 and controlled electronically so as to move said half-moulds 51 and 52 between said first rest position and said second forming and cutting position and vice versa.

Likewise, the first half-moulds 51 can be moved from the rest position to the unloading position by sliding on the third shaped surface 43 and consequent movement of the spindle 511 and of the shaped head 50 between said first rest position and said third unloading position.

The technical solutions adopted for the present invention allow the intended aims and objects to be fully achieved. In particular, the machine for producing food products according to the present model allows the production of a wide range of confectionery products, such as sweets, chewing gum, bubble gum, both of soft and hard type, both of single component type and provided with a filling consisting of a soft product. In practice, the machine according to the present model can be used to produce both single component products, such as gummy sweets or the like, and multi-component, multi-layer products, such as food products like sweets or chewing gum with a sandwich structure (for example, having a central layer produced with one food product interposed between two outer layers, the same as or different from each other, different from said central layer), and also food products with an inner filling, with a closed or open structure.

The embodiments described for the invention in question are susceptible to numerous modifications and variants falling within the scope of the same innovative idea defined in the attached claims. In practice, the materials used and the contingent dimensions and forms can be any, according to requirements and to the state of the art.

## Claims

1. A machine (1) for producing food products (10) **characterized in that** it comprises a supporting structure (2), a moulding station (3) of said food products (10) and a unloading station (4) of said food products, said moulding station (3) comprising a first supporting, conveying and processing chain (31) and a second processing chain (32), said first supporting, conveying and processing chain (31) comprising a plurality of first half-moulds (51) movable between a first rest position, a second preforming and cutting position and a third unloading position of said food products (10), said second processing chain (32) comprising a plurality of second half-moulds (52) opposite each other and couplable with respective first half-moulds (51) and movable between a first rest position and a second preforming and cutting position of said food products (10), said machine (1) also comprising first operating means of said first (31) and second chain (32) for movement of said food products (10) along a first direction of advance, second operating means of said first (51) and/or second half-moulds (52) adapted to move said first (51) and/or second (52) half-moulds between a first rest position and a second preforming and cutting position of said food products (10) and vice versa and third operating means adapted to move said first half-moulds (51) to third unloading position of said food products (10).

2. The machine (1) according to claim 1, **characterized in that** said first (31) and second (32) chains define a substantially horizontal work surface interposed therebetween.

3. The machine (1) according to claim 1 or 2, **characterized in that** said first chain (1) extends into said unloading station (4).

4. The machine (1) according to one or more of the preceding claims, **characterized in that** said unloading station (4) comprises an unloading belt (6) side by side with said first chain (31).

5. The machine (1) according to claim 4, **characterized in that** said unloading belt (6) lies substantially on said work surface.

6. The machine (1) according to one or more of the preceding claims, **characterized in that** said first half-moulds (51) are integral with the movement of said first chain (31) along said first direction of advance, and said second half-moulds (52) are integral with the movement of said second chain (32) along said first direction of advance.

7. The machine (1) according to one or more of the preceding claims, **characterized in that** said first (51) and second (52) half-moulds are mounted sliding on said first (31) and second (32) chains so as to be movable, between said first rest position and said second forming and cutting position, along a second direction substantially perpendicular to said first direction of advance.

8. The machine (1) according to one or more of the preceding claims, **characterized in that** said first half-moulds (51) are mounted sliding on said first chain (31) so as to be movable, in said third unloading position, along a second direction substantially perpendicular to said first direction of advance.

9. The machine (1) according to one or more of the preceding claims, **characterized in that** said second operating means comprise a first (41) and a second (42) shaped surface adapted to impart to said first (51) and second (52) half-moulds a movement along said second direction.

10. The machine (1) according to one or more of the preceding claims, **characterized in that** said third operating means comprise a third shaped surface (43) adapted to impart to said first half-moulds (51) a movement in said third unloading position along said second direction.
